# EUROPEAN PATENT APPLICATION

(11) **EP 4 794 255 A1**
(43) Date of publication of application: **19.08.2026**
(21) Application number: 25157612.0
(22) Date of filing: 13.02.2025
(51) Int. Cl.: H04L 9/08, H04L 9/14, H04L 9/32

(54) **METHOD FOR AUTHENTICATING A BLOCK OF DATA, CORRESPONDING COMPUTER PROGRAM PRODUCT AND DEVICE**

(71) Applicant: Nagravision Sarl, 1033 Cheseaux-sur-Lausanne (CH)
(72) Inventor: HUNACEK, Didier, 1033 CHESEAUX-SUR-LAUSANNE (CH); PENNING, Yann, 1033 CHESEAUX-SUR-LAUSANNE (CH); PRIMAULT, Gilles, 1033 CHESEAUX-SUR-LAUSANNE (CH)
(74) Representative: Parker, Andrew James

(57) **Abstract**

A method is proposed for authenticating a block of data as a block of authentic data. A digital signature is associated with the block of authentic data. According to such method, an electronic device executes:
- generating a verification key;
- decrypting the signature using the verification key delivering a reference data associated with the block of authentic data; and
- comparing the reference data with test data function of the block of data delivering an information representative of the authenticity of the block of data.

The verification key is generated from a Root Key using a key ladder.

## Description

### 1. FIELD OF THE DISCLOSURE

The field of the disclosure is that of cryptography.

More specifically, the disclosure relates to methods and devices for authenticating data.

The disclosure can be of interest in any field wherein such digital data has to be authenticated. This is the case e.g. for devices embedding a piece of software (SW) to be authenticated before being executed, like e.g. Internet of Things (IoT) devices, set-top boxes (STB), smartphones, computers, etc.

### 2. TECHNOLOGICAL BACKGROUND

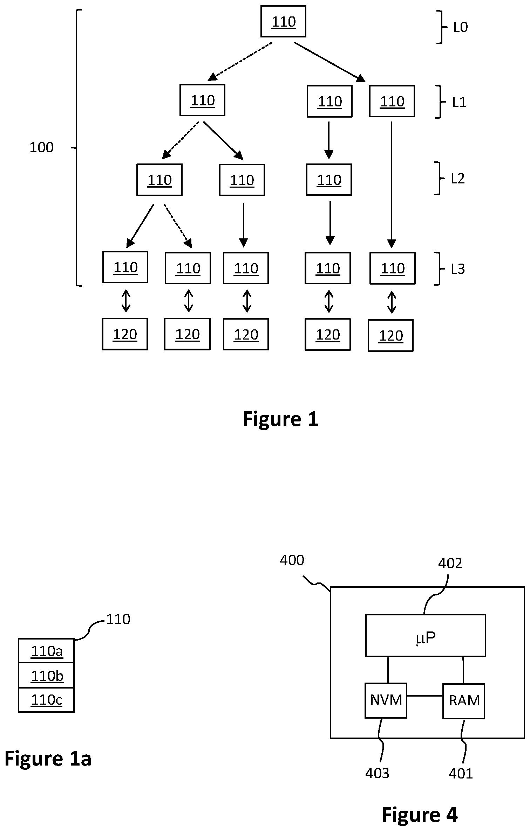

An example of a tree of digital certificates is illustrated in **Figure 1****.** Such tree of digital certificates 110 is classically used to certify the validity (or authenticity) of the cryptographic key to be used for the authentication of a block of data 120 as a block of authentic data. Each path from the root certificate 110 (i.e. the certificate of level L0 in Figure 1) down to the certificate 110 (i.e. the certificate of level L3 in Figure 1) used for the authentication of a given block of data 120 is called a certificates chain (or chain of trust). For example, the certificates chain following the dashed arrows in Figure 1 starts from the root certificate 110 of level L0 and goes through a corresponding certificate 110 of level L1, through a corresponding certificate 110 of level L2, down to a corresponding leaf certificate 110 of level L3. Each element of the chain is used to authenticate the next one. Each arrow from one digital certificate 110 to the next digital certificate 110 corresponds to a digital signature verification operation.

More particularly, as illustrated in **Figure 1a****,** such a digital certificate 110 is composed at least of:
- A first field comprising a key 110a used for verifying the signature of the next element in the chain (i.e. the signature of the next digital certificate 110 or the signature of the corresponding block of data 120 when the end of the chain is reached). The size of such key is typically up to 0.5 Kbytes for classical asymmetric key algorithms and several 10 Kbytes for post quantum asymmetric key algorithms;
- A second field comprising some controlling data 110b to manage the digital rights associated with the digital certificate 110. For example, a version number to manage possible revocations, some identifier to manage market segmentation, etc. The size of such controlling data is typically 10-20 bytes; and
- A third field comprising a digital signature 110c of the digital certificate 110 proving the authenticity of the other data of the certificate 110. The size of such digital signature is the same or close to the size of the key.

It is noted that such certificates chains can also be used for the authentication of data based on symmetric key cryptographic algorithms.

In the field of authentication of digital data embedded in a device, e.g. a piece of SW, such certificate 110 (or certificates chain) is often used for certifying the key to be used for decrypting the digital signature associated to the authentic data. In this case, the certificate 110 (or the certificates chain) needs to be implemented in the device. However, as shown above, this requires a non-negligible amount of memory to store the certificate(s) 110 whereas some devices may have a limited amount of such resources (e.g. loT devices, STB, ...).

There is thus a need for a solution for reducing the amount of data to be stored in devices that need to perform the authentication of blocks of data.

### 3. SUMMARY

A particular aspect of the present disclosure relates to a method for authenticating a block of data as a block of authentic data, a digital signature being associated with the block of authentic data. According to such method, an electronic device executes:
- generating a verification key;
- decrypting the signature using the verification key delivering a reference data associated with the block of authentic data; and
- comparing the reference data with test data function of the block of data delivering an information representative of the authenticity of the block of data.

Said generating the verification key implements a key ladder, the verification key being generated from a Root Key using the key ladder.

Thus, the present disclosure proposes a new and inventive solution for reducing the amount of data to be stored in devices that need to perform the authentication of blocks of data.

Indeed, the use of the key ladder allows avoiding the need for storing full certificates classically used to certify the keys to be used (e.g. in a certificates chain). More particularly, parts of certificates having an important size, e.g. the keys (that are used in practice as intermediate keys in case of a certificates chain) and the digital signatures certifying the validity (or authenticity) of the keys, are not used with the present solution. Those parts thus don't need to be stored in the electronic device authenticating the block of data. Such reduction in the amount of data that needs to be stored holds whatever the type of algorithm (symmetric or asymmetric) used for the encryption/decryption of the digital signature.

In some embodiments, at least one intermediate stage of the key ladder implements a respective algorithm for generating an intermediate key used by a next stage of the key ladder, the respective algorithm being one algorithm among the two complementary algorithms of a symmetric-key cryptographic scheme.

In some embodiments, at least one intermediate stage of the key ladder takes controlling data associated with a digital certificate as input data for generating a respective intermediate key used by a next stage of the key ladder.

There is thus no need to store the entire certificate in a memory of the electronic device: only the controlling data needs to be stored. This saves memory in the device implementing the key ladder.

In some embodiments, the digital certificate belongs to a certificates chain, the controlling data of at least one digital certificate in the chain being taken as input data for the at least one intermediate stage of the key ladder for generating the respective intermediate key used by the next stage of the key ladder.

Thus, the key ladder replaces the chain of certificates while saving memory as only the controlling data of the certificates need to be stored in a memory of the electronic device.

In some embodiments, for at least one digital certificate, the device is configured for not storing in a memory of the device:
- a key associated to the digital certificate; and/or
- a digital signature of the digital certificate.

In some embodiments, at least one intermediate stage of the key ladder takes controlling data associated with the block of data as input data for generating the respective intermediate key.

Thus, the controlling data associated with the block of data are authenticated at the same time as the block of data itself. Indeed, any change in those controlling data would result in a wrong verification key and thus to a failure in the authentication of the block of data.

In some embodiments, the controlling data allow managing the digital rights associated with the block of data.

In some embodiments, the digital signature is the result of applying an algorithm, hereafter signature algorithm, associated with private keys in an asymmetric-key cryptographic scheme, the signature algorithm being applied to the reference data associated with the block of authentic data and using a private key. The verification key is the public key associated to the private key, the decrypting the signature implementing the algorithm associated to the public key in the asymmetric-key cryptographic scheme.

In some embodiments, the digital signature is the result of applying an algorithm, hereafter signature algorithm, among the two complementary algorithms of a symmetric-key cryptographic scheme, the signature algorithm being applied to the reference data associated with the block of authentic data and using a shared key. The verification key is the shared key, the decrypting the signature implementing the other algorithm, hereafter verification algorithm, than the signature algorithm among the two complementary algorithms of the symmetric-key cryptographic scheme.

Thus, there is no need to store the shared key. The use of the key ladder thus naturally protects the shared key that is kept secret (e.g. the key ladder is implemented in a secure element or a cryptographic element of the device). Furthermore, symmetric algorithms are inherently resistant to quantum computers attacks provided that the key is large enough. The solution thus provides a secured solution for authentication of data in the context of post-quantum resistance.

In some embodiments, the signature algorithm is not implemented in the electronic device.

This allows preventing generating counterfeit digital signatures, e.g. digital signatures associated to corrupted data to be authenticated in place of the block of data to be initially authenticated. Indeed, in this later case the authentication stage would be irrelevant as the digital signature would always comply with the corrupted data.

In some embodiments, a given stage of the key ladder implements the verification algorithm used during the decrypting the signature.

Thus, the verification algorithm is secured (e.g. the key ladder is implemented in a secure element or a cryptographic element of the device).

In some embodiments:
- during said generating the shared key, a plurality of successive intermediate stages of the key ladder generates the shared key; and
- during said decrypting the signature, the given stage uses the shared key generated by the successive intermediate stages.

Thus, there is no need to store the shared key. The use of the key ladder thus naturally protects the shared key that is kept secret.

In some embodiments, the reference data is the block of authentic data, the test data being the block of data.

In some embodiments, the reference data is a digest of the block of authentic data resulting of applying a Hash function to the block of authentic data. The comparing the reference data with test data comprises: hashing the block of data using the Hash function delivering the test data.

Another aspect of the present disclosure relates to a computer program product comprising program code instructions for implementing the above-mentioned method for authenticating a block of data (in any of its different embodiments), when said program is executed on a computer or a processor.

Another aspect of the present disclosure relates to a device for authenticating a block of data according to the present disclosure (in any of its different embodiments). The features and advantages of this device are thus the same as those of the method for authenticating a block of data according to the present disclosure (in any of its different embodiments). Therefore, they are not detailed any further.

### 4. LIST OF FIGURES

Other features and advantages of embodiments shall appear from the following description, given by way of indicative and non-exhaustive examples and from the appended drawings, of which:
- Figure 1, already discussed above in the section "technological background", illustrates a tree of digital certificates comprising different certificates chains;
- Figure 1a, already discussed above in the section "technological background", illustrates different fields of a digital certificate belonging to the tree of Figure 1;
   Figure 2 illustrates a key ladder used for the authentication of a block of data according to one embodiment of the present disclosure;
   Figure 3 illustrates a flowchart of a method for authenticating a block of data according to one embodiment of the present disclosure; and
- Figure 4 illustrates an example of the structural blocks of a device that can be used for implementing the method of figure 3 according to one embodiment of the present disclosure.

### 5. DETAILED DESCRIPTION

In all of the figures of the present document, the same numerical reference signs designate similar elements and steps.

The disclosed technique for reducing the amount of data to be stored in an electronic device 400 configured for performing the authentication of one (or more) block of data 120 relies on the implementation in such device 400 of a key ladder 200 for generating the verification key 230 to be used for the authentication.

Indeed, the use, by the device 400, of a key ladder 200 allows avoiding the need for storing e.g. full digital certificates 110 classically used to certify the keys (e.g. in a certificates chain) involved in the authentication process. For instance, parts of certificates 110 having an important size, e.g. the keys 110a (that are used to verify the digital signature of the next element: digital signature of the next digital certificate 110 in the chain or digital signature of the block of data 120 when the end of the chain is reached) and the digital signatures 110c certifying the validity (or authenticity) of the keys in the certificates, are not used with the present solution. Those parts thus don't need to be stored in the device 400 authenticating the block of data. Such reduction in the amount of data that needs to be stored holds whatever the type of cryptographic algorithm (symmetric or asymmetric) used for the encryption/decryption of the digital signature used for the authentication.

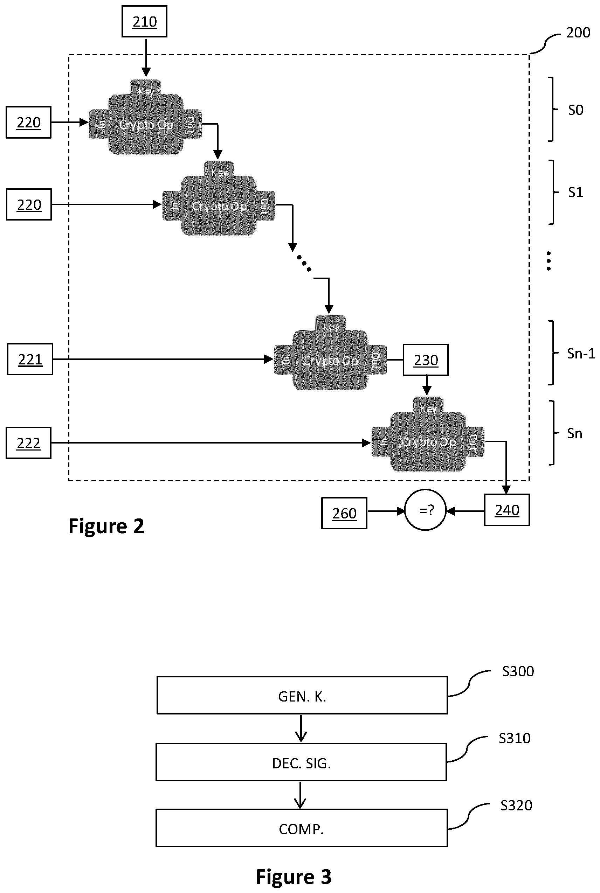

More particularly, as illustrated in **Figure 2****,** such key ladder 200 comprises different intermediate stages S0, S1, ... Sn-1 for generating, from a Root Key 210, the verification key 230 used to decrypt the digital signature 222 associated with the block of authentic data. In the present embodiment, a plurality of intermediate stages S0, S1, ... Sn-1 are used for generating the verification key 230 from the Root Key 210. The last stage Sn-1 of the plurality of intermediate stages S0, S1, ... Sn-1 thus takes as input data the verification key 230 in an encrypted form 221. It is noted that in other embodiments, only one intermediate stage is used for generating the verification key 230 from the Root Key 210.

In some embodiments, one (or more) intermediate stage S0, S1 of the key ladder implements a respective cryptographic algorithm for generating an intermediate key used by the next stage S1, ..., Sn-1 of the key ladder 200. For instance, the respective algorithm is one algorithm among the two complementary algorithms of a symmetric-key cryptographic scheme.

Back to Figure 2, such intermediate stage S0, S1 of the key ladder 200 takes input data 220 for generating the respective intermediate key using the intermediate key generated by the previous intermediate stage.

For instance, in some embodiments, controlling data 110b associated with at least part of a digital certificate 110 are taken as input data 220 for generating the respective intermediate key used by the next stage S1, ..., Sn-1 of the key ladder 200. There is thus no need to store the entire certificate 110 in a memory 403 of the electronic device 400: only the controlling data 110b need to be stored. This saves memory space in the device 400 implementing the key ladder 200.

In some of those embodiments, the digital certificate 110 belongs to a certificates chain. The controlling data 110b of at least one digital certificate 110 in the chain are taken as input data for at least one intermediate stage S0, S1 of the key ladder 200 for generating its respective intermediate key used by a next stage S1, ..., Sn-1 of the key ladder 200. For instance, in some embodiments the controlling data 110b of successive digital certificates 110 in the chain are taken as input data for successive intermediate stages S0, S1 of the key ladder 200 in a one-to-one correspondence between the digital certificates 110 of the chain and the intermediate stages S0, S1 of the key ladder 200. Alternatively, in some embodiments there is a 1-to-N mapping between the controlling data 110b of a digital certificate 110 in the chain and the input data of a plurality of intermediate stages S0, S1 of the key ladder 200. Conversely, in some embodiments there is a N-to-1 mapping between the controlling data 110b of a plurality of digital certificates 110 in the chain and the input data of an intermediate stage S0, S1 of the key ladder 200. Overall, the set of controlling data 110b of the digital certificates 110 in the chain corresponds to the set of input data of the intermediate stages S0, S1 of the key ladder 200. Thus, the key ladder 200 replaces the chain of certificates 110 while saving memory space as only the controlling data 110b of the digital certificates 110 need to be stored in a memory 403 of the electronic device 400. Consequently, in some embodiments, for at least one such digital certificate 110, the device 400 implementing the key ladder 200 is configured for not storing in a memory 403 of the device: a key 110a associated to the digital certificate 110 and/or a digital signature 110c of the digital certificate 110.

Conversely, in other embodiments, controlling data 110b associated with the block of data 120 to be authenticated are taken as input data 220 for generating the respective intermediate key used by a next stage S1, ..., Sn-1 of the key ladder. Thus, the controlling data associated with the block of data 120 are authenticated at the same time as the block of data 120 itself. Indeed, any change in those controlling data would result in a wrong verification key 230 and thus to a failure in the authentication of the block of data 120. For instance, such controlling data associated with the block of data 120 allow managing the digital rights associated with the block of data 120 (The controlling data comprise e.g. a version number to manage possible revocations, an identifier to manage market segmentation, etc. The block of data 120 is e.g. a piece of SW to be executed in the electronic device 400).

In yet other embodiments, the input data 220 are taken as predetermined data. In yet other embodiments, input data 220 of different types (e.g. predetermined data, controlling data 110b associated with at least part of a digital certificate 110, controlling data associated with the block of data 120 to be authenticated, ...) can be considered for different intermediate stages S0, S1 of the key ladder 200.

Back to Figure 2, the last stage Sn of the key ladder 200 is used for implementing the cryptographic algorithm to be used for decrypting the digital signature 222 associated with the block of authentic data. More particularly, based on the verification key 230, the last stage Sn of the key ladder 200 decrypts the signature 222 for delivering reference data 240 associated with the block of authentic data. The reference data 240 are then compared with test data 260 function of the block of data 120 to be authenticated delivering an information representative of the authenticity of the block of data 120. In other embodiments, another stage than the last stage Sn of the key ladder 200 is used for implementing the cryptographic algorithm to be used for decrypting the digital signature 222 associated with the block of authentic data. In yet other embodiments, the decryption of the signature 222 is not performed by a stage of the key ladder 200. The cryptographic algorithm to be used for decrypting the digital signature 222 associated with the block of authentic data is implemented in another part of the device 400 (e.g. in a secure element or a cryptographic element of the device 400). Those aspects are also discussed below in relation with Figure 3.

Referring now to **figure 3****,** we present a method for authenticating a block of data 120 as a block of authentic data according to the present disclosure. Such method is executed by the device 400 implementing the key ladder 200 (in any of the embodiments described above in relation with Figure 2). As discussed above, a digital signature 222 is associated with the block of authentic data.

Thus, in a **step S300,** the device 400 generates a verification key 230 from a Root Key 210 using the key ladder 200.

In a **step S310,** the device 400 decrypts the signature 222 using the verification key 230 delivering a reference data 240 associated with the block of authentic data. As discussed above, the cryptographic algorithm to be used for decrypting the digital signature 222 associated with the block of authentic data may be implemented in a given stage of the key ladder 200 or in another part of the device 400.

Back to Figure 3, in a **step S320,** the device 400 compares the reference data 240 with test data 260 function of the block of data 120 delivering an information representative of the authenticity of the block of data 120. For instance, if the test data 260 is equal to the block of data 120, the information is representative of the fact that the block of data 120 has been considered authentic. Conversely, if the test data 260 is not equal to the block of data 120, the information is representative of the fact that the block of data 120 has not been considered authentic.

In some embodiments the reference data 240 is the block of authentic data. The test data 260 is the block of data 120 to be authenticated. In other embodiments, the reference data 240 is a digest of the block of authentic data. Such digest results e.g. of applying a one-way function (e.g. a Hash function) to the block of authentic data. In this case, during the step S320, the device 400 applies the one-way function to the block of data 120 delivering the test data 260 to be compared to the reference data 240. It is noted that a one-way function is a function that is easy to compute on every input, but hard to invert given the image of a random input. Here, "easy" and "hard" are to be understood in the sense of computational complexity theory, specifically the theory of polynomial time problems. The one-way functions can be custom or standard one-way functions (e.g. SHA-256, HMAC-SHA256, ...).

As discussed above, the present method for authenticating a block of data 120 as a block of authentic data based on the use of a key ladder 200 works equally whatever the type of cryptographic algorithm (symmetric or asymmetric) used for the encryption/decryption of the digital signature 222.

Consequently, in some embodiments the digital signature 222 is the result of applying, to the reference data associated with the block of authentic data (e.g. to the block of authentic data itself or to a digest of the block of authentic data) and using a private key, of an algorithm (i.e. the signature algorithm), associated to private keys in an asymmetric-key cryptographic scheme. The verification key 230 is the public key associated to the private key. During step S310, the decryption of the signature 222 implements the algorithm associated to the public key in the asymmetric-key cryptographic scheme.

Conversely, in some embodiments the digital signature 222 is the result of applying, to the reference data associated with the block of authentic data (e.g. to the block of authentic data itself or to a digest of the block of authentic data) and using a shared key, of an algorithm (i.e. the signature algorithm), among the two complementary algorithms of a symmetric-key cryptographic scheme. In this case, the verification key 230 is the shared key. During step S310, the decryption of the signature 222 implements the other algorithm (i.e. the verification algorithm) than the signature algorithm among the two complementary algorithms of the symmetric-key cryptographic scheme.

Symmetric algorithms are inherently resistant to quantum computers attacks provided that the shared key is large enough. The solution thus provides a secured solution for authentication of data in the context of post-quantum resistance. It is noted that the two complementary algorithms of the symmetric-key cryptographic scheme comprise the algorithm for encryption (i.e. the signature algorithm) and the algorithm for decryption. The purpose of those two algorithms can be swapped. However, if one of the two algorithms is used for encryption (i.e. this algorithm is used as the signature algorithm for obtaining the signature 222 from reference data associated with the block of authentic data), the other one of the two algorithms needs to be used for decryption (i.e. this algorithm is used as the verification algorithm for obtaining the reference data associated with the block of authentic data from the signature 222), both using the shared key.

In some of the embodiments relating to the use of a symmetric-key cryptographic scheme, a given stage Sn of the key ladder implements the verification algorithm. For instance, during step S300, a plurality of successive intermediate stages S0, ..., Sn-1 of the key ladder 200 generate the shared key as the verification key 230. During step S310, the given stage Sn uses the shared key generated by the successive intermediate stages S0, ..., Sn-1. Thus, there is no need to store the shared key in a memory 403 of the device 400. The use of the key ladder 200 thus naturally protects the shared key that is kept secret.

In some of the embodiments relating to the use of a symmetric-key cryptographic scheme, the signature algorithm is not implemented in the electronic device 400. This allows preventing generating counterfeit digital signatures, e.g. digital signatures associated to corrupted data to be authenticated in place of the block of data 120 to be initially authenticated. Indeed, in this later case the authentication stage would be irrelevant as the digital signature would always comply with the corrupted data.

Referring now to **figure 4****,** we illustrate an example of the structural blocks for the electronic device 400 that can be used for implementing the method for authenticating a block of data 120 according to the disclosure (according to any of the embodiments disclosed above).

In an embodiment, the device 400 comprises a non-volatile memory (NVM) 403 (e.g. a read-only memory (ROM), a hard disk, a flash memory, etc.), a volatile memory 401 (e.g. a random-access memory or RAM) and a processor 402. The non-volatile memory 403 is a non-transitory computer-readable carrier medium. It stores executable program code instructions, which are executed by the processor 402 in order to enable implementation of the method described above (method for authenticating a block of data 120) in the various embodiment disclosed above.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

All the steps of the method for authenticating a block of data 120 according to the disclosure may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

## Claims

1. Method for authenticating a block of data (120) as a block of authentic data, a digital signature (222) being associated with the block of authentic data,
wherein an electronic device (400) executes:
- generating (S300) a verification key (230);
- decrypting (S310) the signature using the verification key delivering a reference data (240) associated with the block of authentic data; and
- comparing (S320) the reference data with test data (260) function of the block of data delivering an information representative of the authenticity of the block of data,
**characterized in that** said generating the verification key implements a key ladder (200), the verification key (230) being generated from a Root Key (210) using the key ladder.

2. Method according to claim 1, wherein at least one intermediate stage (S0, S1) of the key ladder implements a respective algorithm for generating an intermediate key used by a next stage (S1, ..., Sn-1) of the key ladder, the respective algorithm being one algorithm among the two complementary algorithms of a symmetric-key cryptographic scheme.

3. Method according to claim 1 or 2, wherein at least one intermediate stage (S0, S1) of the key ladder takes controlling data (110b) associated with a digital certificate (110) as input data (220) for generating a respective intermediate key used by a next stage (S1, ..., Sn-1) of the key ladder.

4. Method according to claim 3, wherein the digital certificate belongs to a certificates chain, the controlling data of at least one digital certificate in the chain being taken as input data for the at least one intermediate stage of the key ladder for generating the respective intermediate key used by the next stage (S1, ..., Sn-1) of the key ladder.

5. Method according to claim 1 or 2, wherein at least one intermediate stage (S0, S1) of the key ladder takes controlling data associated with the block of data as input data (220) for generating the respective intermediate key.

6. Method according to claim 5, wherein the controlling data allow managing the digital rights associated with the block of data.

7. Method according to any of the claims 1 to 6, wherein the digital signature is the result of applying an algorithm, hereafter signature algorithm, associated to private keys in an asymmetric-key cryptographic scheme, the signature algorithm being applied to the reference data associated with the block of authentic data and using a private key, wherein the verification key (230) is the public key associated to the private key, the decrypting the signature implementing the algorithm associated to the public key in the asymmetric-key cryptographic scheme.

8. Method according to any of the claims 1 to 6, wherein the digital signature is the result of applying an algorithm, hereafter signature algorithm, among the two complementary algorithms of a symmetric-key cryptographic scheme, the signature algorithm being applied to the reference data associated with the block of authentic data and using a shared key,
wherein the verification key (230) is the shared key, the decrypting the signature implementing the other algorithm, hereafter verification algorithm, than the signature algorithm among the two complementary algorithms of the symmetric-key cryptographic scheme.

9. Method according to claim 8, wherein the signature algorithm is not implemented in the electronic device.

10. Method according to claim 8 or 9, wherein a given stage (Sn) of the key ladder implements the verification algorithm used during the decrypting the signature.

11. Method according to claim 10, wherein:
- during said generating the shared key, a plurality of successive intermediate stages (S0, ..., Sn-1) of the key ladder generates the shared key (230); and
- during said decrypting the signature, the given stage (Sn) uses the shared key generated by the successive intermediate stages.

12. Method according to any of the claims 1 to 11, wherein the reference data is the block of authentic data, the test data being the block of data.

13. Method according to any of the claims 1 to 11, wherein the reference data is a digest of the block of authentic data resulting of applying a Hash function to the block of authentic data,
and wherein the comparing the reference data with test data comprises: hashing the block of data using the Hash function delivering the test data.

14. Computer program product comprising program code instructions for implementing a method according to at least one of the claims 1 to 13.

15. Device (400) comprising at least one processor (402) or at least one field-programmable gate array or at least one dedicated computing machine configured for carrying out the steps of the method of any of the claims 1 to 13.
